Europäisches Patentamt

European Patent Office

Office européen des brevets

(11) Publication number: **0 286 691**
**A1**

# EUROPEAN PATENT APPLICATION

(21) Application number: 87103366.8

(51) Int. Cl.⁴: **G11B 23/087**

(22) Date of filing: **09.03.87**

(43) Date of publication of application:
**19.10.88 Bulletin 88/42**

(84) Designated Contracting States:
**AT BE CH DE ES FR GB GR IT LI NL SE**

(71) Applicant: **Lin, Long-Jin**
**No. 53 Yih Yeong Road**
**80257 Lin Ya Dist Kaohsiung(TW)**

(72) Inventor: **Lin, Long-Jin**
**No. 53 Yih Yeong Road**
**80257 Lin Ya Dist Kaohsiung(TW)**

(74) Representative: **Füchsle, Klaus, Dipl.-Ing. et al**
**Hoffmann . Eitle & Partner Patentanwälte**
**Arabellastrasse 4**
**D-8000 München 81(DE)**

(54) **Improved wheel locks for video tape cassettes.**

(57) Wheel lock molded as one whole unit (1, 11, 111) (part) with flexible and elastic plastics as its material. This single part can effectively prevent the wheels (3) of the tape cassette from free rotation or make it rotate freely, which is conventionally effected by the mutual transmission of five units (parts). Therefore, this invention, a single unit, is easy for manufacture and assembly, low in its costs and accurate in its action.

FIG.6

## IMPROVED WHEEL LOCKS FOR VIDEO TAPE CASSETTES

The method used to prevent conventional video tape cassettes wheels from loosening while not working is dependent on the serration around the edge of the tape wheels, a moving unit that can be inclinedly moved only upwards, two fixing arms that can be moved by said moving unit and two springs set respectively on said fixing arms for automatically pushing back said fixing arms. When the tape is not put into the tape recorder or the rewinder the moving unit stays at the normal position and the fixing arms, by means of their springs, gear with the serration of the tape wheels preventing the tape wheels from idle rotation. On the contrary, when the tape is put into a recorder or a rewinder, the lifting rod of the recorder or the rewinder will push the moving unit upwards, and the fixing arms, being moved by the moving unit, is to be separated from the serration of the tape wheels so that the tape wheels may be set loose for free rotation.

But the above mentioned design of conventional locking tape wheels still has the disadvantages listed as follows.

I. The locking design for fixing wheels is based on mutual movement between five parts made up of passive and indirect transmission method. They do double-armed synchronous action which causes their complicated structure, and their production cost runs high because five parts need separate molds in manufacture.

2. The operational action is not quite accurate because of its indirect action operated by five parts used in round-about transmission.

3. Since each of the fixing arms plays independent synchronous action, if any of the two springs is fatigued or out of order, the fixing capability will be lost immediately.

Conclusively, the conventional video tape cassette is not only complicated in structure but has high costs. As it includes quite few of parts which are rather complicated for manufacturing and are easy to get lost owing to its small sizes and have high percentage of running out of order. Besides, their actions are not direct. Therefore it is necessary to improve such a tape cassette for both manufactures and users. In order to improve the above mentioned disadvantages, the inventor has worked hard to provide this invention.

This invention is described in the claims and makes use of a one-piece locking base with double wings to directly carry out locking and loosening action to tape wheels in a video tape cassette.

Conclusively, the advantages of this invention is listed as follows.

I. Replacing the conventional complicated parts with a simple part.

2. Directly carrying out locking and releasing actions.

3. Simple structure, low costs, easy assembling and very low percentage of getting out of order.

4. Simplicity in manufacturing with flexible and elastic plastics by means of one mold and long life for use.

5. Meeting the requirements of mass production and rapid assembly.

6. High precision in its performance, concision in its quality and effective promotion in its production technology.

Generally speaking, this invention possesses not only excellent practical function and commercial value but also promotes the efficiency and the quality of a video tape cassette.

Brief Description Of The Drawings

Fig. I is a diagram of the locking base in this invention.

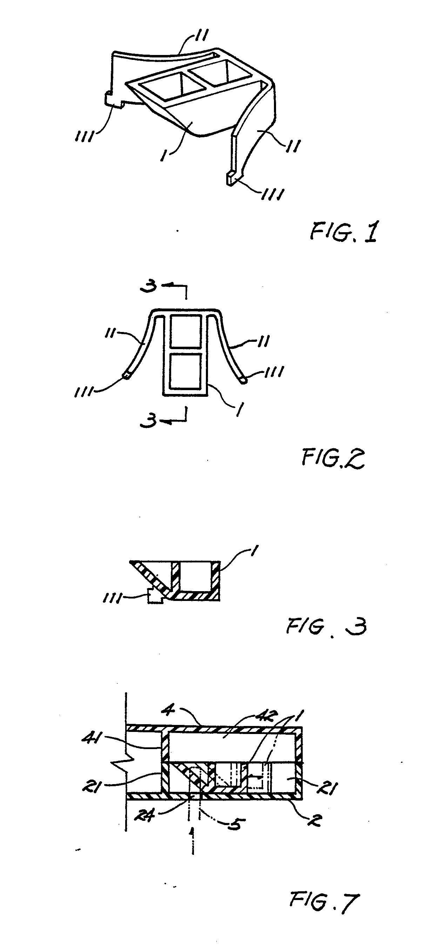

Fig. 2 is a top view of the locking base in this invention.

Fig. 3 is a cross-section view of the locking base in this invention.

Fig. 4 is the top view of the lower cover of the tape cassette in this invention.

Fig. 5 is the top view of the upper cover of the tape cassette in this invention.

Fig. 6 is an implying view of the action between the lower cover and the locking base.

Fig. 7 is an implying assembled view of the upper cover, the lower cover and the locking base.

As shown in figures I,2,3, this invention, a double-winged locking base I, is molded as one unit (part) with flexible elastic plastics. The front bottom edge of the locking base I is shaped as an inclined surface which is convenient for a pushing rod in a tape recorder or a rewinder to push back the locking base I and the two sides of the back edge of the locking base I are respectively connected with a fixing wing II that extends outwards smoothly in a certain curve. The bottom of the end of the fixing wing II has a projection III which is to lock in a notch of the serration set around the tape wheels 3.

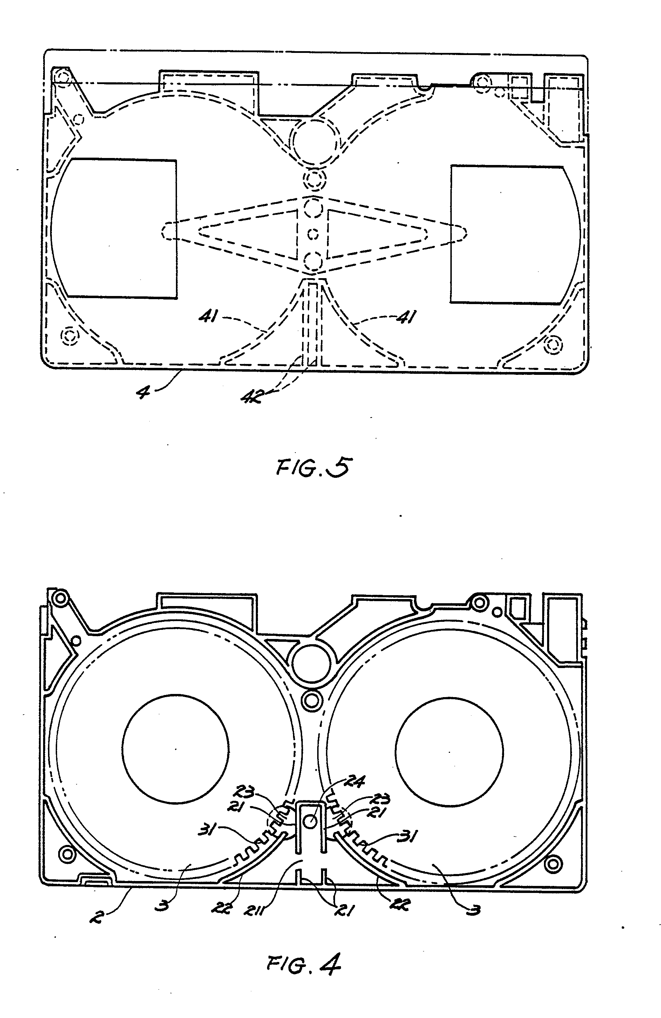

Figures 4,6 are implying views of the double-winged locking base I assembled with a lower cassette cover. The locking base I is fixed between two guiding walls 2I which are set in parallel at the middle inside of and rectangularly to the back wall of the lower cover 2. The guiding walls 2I are as high as the locking base I. On the guiding walls 2I there are respectively a slot 2II facing each other, letting the locking base I matched between the two guiding walls 2I able to move smoothly to and fro without obstructing the fixing wings II, which extend curvilineally. In addition, set at the two sides of the parallel guiding walls 2I are two supporting walls 22 which respectively support the fixing wings II so as to stop the tape wheels solidly while the locking base I stays at its normal position.

A hole 23 is bored in the lower cover 2 between each of guiding walls 2I and each of the supporting walls 22 for the projection III of the fixing walls II to sit in, enabling the front edge (tip) of the fixing wings II to exactly lock in one of the serration notches of the wheels 3, so as to prevent the wheels from idle rotation.

A hole 24 bored in the bottom of the lower cover 2 between the two guiding walls 2I is to be inserted by the lifting rod 5 of a tape recorder or a rewinder.

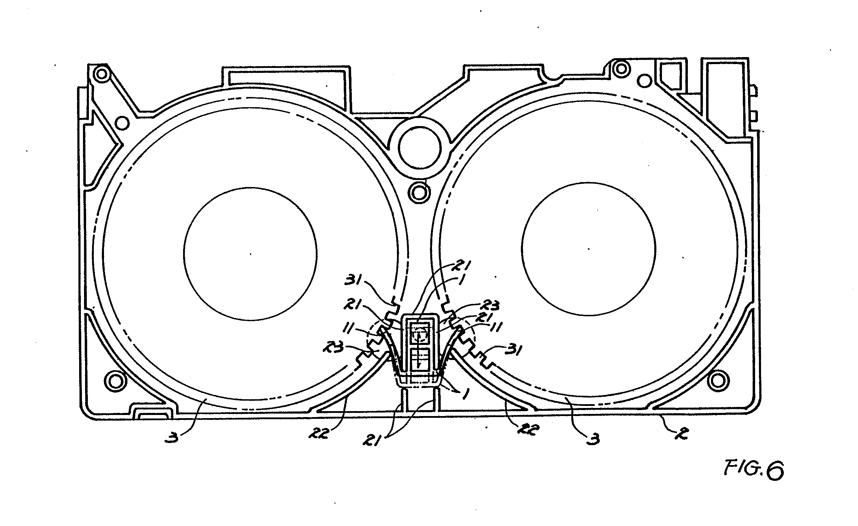

An upper cover 4 to be matched on the lower cover 2, as shown in figure 5, has two curved walls 4I set on the inner side of its back wall; the curved walls face the supporting walls 22 of the lower cover 2. Two fixing walls 42 are set between the curved walls 4I in parallel and have a shorter distance between them than the width of the locking base I so that when the lower and upper covers 2,4 are matched together, the parallel fixing walls 42 touch exactly the upper edge of the locking base I enabling the locking base I to be combined and to move to and fro between the guiding walls 2I of the lower cover 2.

Next, the action of the locking base I is explained as follows.

As a tape is put into a recorder or a rewinder, the lifting rod 5 of the recorder or the rewinder will rise to insert into the hole 24 of the lower cover 2 and push back the locking base I along the slope of the front bottom edge of the locking base I. Meanwhile, the fixing wings II of the locking base I, because of the backward movement of the locking base I and the pushing of the supporting walls 22, will move backward and additional inward as well so that they can slip off the serration notch 3I of the wheels, which can then rotate freely.

When the tape is ejected out, the locking base I, because of not being pushed by the lifting rod 5 of the recorder, will immediately resile back to its normal position by the stretching force of the fixing wings and gear in one of the serration notches 3I of the wheels 3 via the extension of the fixing wings II.

## Claims

1. A sort of improved wheel lock for a video tape cassette which is set with a locking base (I) between its two wheels (3) inside its cover, able to move to and fro; two fixing wings (II) are formed at two sides of said locking base (I) and extend curvilineally; under normal position the tips of said fixing wings are to respectively lock in one of the serration notches around the edge of said wheels (3) so as to prevent said wheels from idle rotation; when said locking base (I) is pushed backward, its fixing wings (II) also go backward and its tips of the wings no longer lock said wheels; but when the pushing force disappears, said locking base (I) will return to its normal position by the stretching force of the fixing wings (II).

2. A sort of improved wheel lock as claimed in item I, wherein said locking base (I) is made of plastics with high flexibility and elasticity, and has an inclined front lower edge and two wings set at its two sides and linked together at its back edge.

3. A sort of improved wheel lock as claimed in item I, wherein said locking base (I) is located between two parallel guiding walls (2I) set rectangularly to the back wall of the lower cover (2) of the tape cassette; said two guiding walls have a slot (2II) for said fixing wings (II) to move back and forth and in addition a supporting wall (22) respectively are set at their both sides which is to touch the outer surface of said fixing wings (II) with its front end preventing said fixing wings from being forced to extend outward while said locking base is not pushed backward.

4. A sort of improved wheel lock as claimed in item I, wherein the two guiding walls (2I) and the supporting walls (22) have the same height as said locking base (I) in order to combine with said locking base.

5. A sort of improved wheel lock as claimed in item I, wherein an upper cassette cover (4) has two parallel supporting walls (22) set at its back wall and facing said guiding walls (2I) of the lower cover (2), are to stay on the upper surface of said locking base (I) and the distance between the supporting walls (22) is shorter than the width of said locking base (I).

6. A sort of improved wheel lock as claimed in item I, wherein the length of the guiding walls (2I) is the same as that of fixing walls (42) of the upper cover (4).

FIG. 1

FIG.2

FIG. 3

FIG. 7

FIG.5

FIG.4

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 508 223  (SONY)<br>* Page 7, line 30 - page 9, line 2; figures * | 1-3 | G 11 B  23/087 |
| A | | 4-6 | |
| | --- | | |
| X | PATENT ABSTRACTS OF JAPAN, vol. 7, no. 60 (P-182)[1205], 12th March 1983; & JP-A-57 205 873 (SONY K.K.) 17-12-1982<br>* Abstract; figures * | 1-3 | |
| A | Idem | 4-6 | |
| | --- | | |
| X | EP-A-0 111 876  (HITACHI MAXELL)<br>* Page 7, line 17 - page 14, line 18; figures * | 1-4 | |
| | --- | | TECHNICAL FIELDS SEARCHED (Int. Cl.4) |
| A | GB-A-2 099 400  (NIPPON VICTOR)<br>* Abstract; figures * | 1-3 | G 11 B |
| | --- | | |
| A | GB-A-2 020 628  (SONY)<br>* Page 2, line 71 - page 3, line 21; figures * | 1-3 | |
| | --- | | |
| A | DE-A-3 414 020  (FUJI PHOTO)<br>* Claims; figures; page 6, lines 7-10 * | 1-4 | |
| | ---                    -/- | | |

The present search report has been drawn up for all claims

| Place of search | Date of completion of the search | Examiner |
|---|---|---|
| THE HAGUE | 30-10-1987 | DECLAT M.G. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | EP-A-0 179 169 (SONY)<br>* Page 21, line 7 - page 26, line 28; figures 8-12 * | 1-4 | |
| A | US-A-4 631 619 (K. HASHIZUME) | | |
| A | EP-A-0 146 311 (SONY) | | |
| A | EP-A-0 167 142 (BASF) | | |

TECHNICAL FIELDS SEARCHED (Int. Cl.4)

The present search report has been drawn up for all claims

| Place of search | Date of completion of the search | Examiner |
|---|---|---|
| THE HAGUE | 30-10-1987 | DECLAT M.G. |